# FASCICULE DE BREVET EUROPEEN

(11) **EP 2 879 914 B1**
(45) Date de publication et mention de la délivrance du brevet: **23.08.2023**
(21) Numéro de dépôt: 13742631.8
(22) Date de dépôt: 29.07.2013
(51) Int. Cl.: H05B 47/10, H05B 47/29, H05B 45/50, B60Q 11/00

(54) **SYSTEME DE SIGNALISATION POUR VEHICULE AUTOMOBILE**
SIGNALISIERUNGSSYSTEM FÜR KRAFTFAHRZEUGE
SIGNALLING SYSTEM FOR MOTOR VEHICLES

(30) Priorité: 02.08.2012 FR 1202176
(43) Date de publication de la demande: 10.06.2015
(73) Titulaire: Valeo Vision, 93012 Bobigny Cedex (FR)
(72) Inventeur: SEIF, Lothar, F-93250 Villemomble (FR); GAGELIN, Romuald, F-75012 Paris (FR)
(74) Mandataire: Valeo Visibility
(86) Numéro de dépôt international: PCT/EP2013/065881
(87) Numéro de publication internationale: WO 2014/019974

(56) Documents cités:
- EP-A1- 2 549 836
- DE-A1-102009 027 326
- FR-A1- 2 875 577
- US-A1- 2005 057 179
- US-A1- 2010 085 179
- US-A1- 2011 285 320
- US-A1- 2012 127 719

## Description

Le secteur technique de la présente invention est celui des dispositifs ou moyens d'éclairage et/ou de signalisation pour véhicule automobile.

Il est connu, dans le domaine automobile, de réaliser des systèmes d'éclairage et/ou de signalisation associant plusieurs modules lumineux afin de réaliser des fonctions d'éclairage et/ou de signalisation. Pour des besoins de style et d'économie, de tels systèmes peuvent comporter un premier module lumineux qui réalise une partie d'une première fonction photométrique réglementaire et un deuxième module lumineux qui réalise sélectivement l'autre partie de la première fonction ou la totalité d'une deuxième fonction photométrique réglementaire.

En cas de défaillance du deuxième module, seule une partie de la première fonction peut être réalisée par le système. Un inconvénient est donc que la photométrie de cette première fonction est réduite, ce qui peut mettre en danger à la fois le conducteur du véhicule et les autres usagers de la route.

D'autre part, les réglementations automobiles imposent aux systèmes d'éclairage et/ou de signalisation de respecter des contraintes notamment en cas de défaillance de ces systèmes. Il peut être par exemple prévu que le système, lorsqu'il réalise une fonction d'éclairage et/ou de signalisation, doive respecter une grille photométrique associée à cette fonction. Un autre inconvénient des systèmes connus est qu'ils peuvent transgresser ces réglementations, en cas de défaillance. Le document US 2005/057179 A1 divulgue un système de signalisation pour véhicule automobile comprenant deux modules lumineux commandés pour réaliser deux fonctions de signalisation distinctes, de position arrière et de stop, chaque fonction étant réalisée avec une pluralité de sources lumineuses. Ce document divulgue la désactivation des deux modules en cas de défaillance du premier ou du deuxième module; pour ne pas risquer de fournir une fonction photométrique insuffisante, le système interrompe toutes les fonctions d'éclairage en cas de défaillance d'une quelconque de la pluralité de sources lumineuses.

L'invention a notamment pour but de pallier aux inconvénients précités.

L'invention a pour objet un système de signalisation pour véhicule automobile tel que défini dans la revendication indépendante 1 et dans les revendications dépendantes 2-5 ci-jointes. Le préambule de la revendication 1 est connu par le document FR 2 875 577 A1 qui divulgue un système de signalisation comprenant un premier module lumineux apte à réaliser une partie d'une première fonction (fonction DRL), un deuxième module lumineux apte à réaliser une partie d'une deuxième fonction distincte de la première fonction (fonction changement de direction) et un troisième module apte à réaliser sélectivement au moins une autre partie de la première fonction et au moins une autre partie de la deuxième fonction.

La présente demande divulgue un procédé de commande d'un système d'éclairage et/ou de signalisation, ce système comprenant au moins :
- un premier module lumineux apte à réaliser une partie d'une première fonction d'éclairage et/ou de signalisation réglementaire ;
- un deuxième module lumineux apte à réaliser une partie d'une deuxième fonction d'éclairage et/ou de signalisation réglementaire distincte de la première fonction ; et
- un troisième module apte à réaliser sélectivement au moins une autre partie de la première fonction et au moins une autre partie de la deuxième fonction ;
le procédé comportant l'étape suivante : on désactive l'émission de lumière des premier et deuxième modules en cas de défaillance du troisième module.

En cas de défaillance du troisième module, l'émission de lumière du système est interrompue pour toutes les fonctions photométriques. En l'absence de réalisation de fonction photométrique, le système est libre de toute contrainte réglementaire, permettant ainsi de respecter la réglementation en cas de défaillance du troisième module.

Par ailleurs, vis-à-vis de la sécurité des usagers de la route, il est préférable que le système s'abstienne de réaliser une fonction photométrique rendue défectueuse par la défaillance du troisième module, permettant notamment d'améliorer cette sécurité.

Selon un mode de réalisation, on désactive l'émission de lumière du troisième module uniquement pour la réalisation de la première fonction en cas de défaillance du premier module. En cas de défaillance du premier module, la réalisation de la première fonction photométrique est ainsi rendue impossible.

Le cas échéant, on peut activer l'émission de lumière du troisième module pour la réalisation de la deuxième fonction. De cette manière, la deuxième fonction photométrique peut toujours être réalisée de manière réglementaire.

Selon un autre mode de réalisation, on désactive l'émission de lumière du troisième module uniquement pour la réalisation de la deuxième fonction en cas de défaillance du deuxième module.

Le cas échéant, on peut activer l'émission de lumière du troisième module pour la réalisation de la première fonction.

Selon encore un autre mode de réalisation, on désactive l'émission de lumière du troisième module pour toutes les réalisations des fonctions en cas de défaillance du premier module et/ou du deuxième module.

Avantageusement, lors d'une défaillance du premier et/ou du deuxième module, on désactive l'émission de lumière de tous les autres modules. Un avantage conféré par cette caractéristique est d'éviter de réaliser une fonction défectueuse en cas de défaillance, quelque soit le module défaillant.

La présente demande divulgue également un système d'éclairage et/ou de signalisation notamment pour véhicule automobile, ce système comprenant au moins :
- un premier module lumineux apte à réaliser une partie d'une première fonction d'éclairage et/ou de signalisation réglementaire ;
- un deuxième module lumineux apte à réaliser une partie d'une deuxième fonction d'éclairage et/ou de signalisation réglementaire distincte de la première fonction, et
- un troisième module apte à réaliser sélectivement au moins une autre partie de la première fonction et au moins une autre partie de la deuxième fonction ;
l'émission de lumière des premier et deuxième modules étant désactivée en cas de défaillance du troisième module.

Selon une caractéristique de l'invention, le troisième module comprend des moyens de diagnostique aptes à diagnostiquer une défaillance d'au moins un des composants du troisième module, notamment une défaillance de la source de lumière du troisième module.

Si on le souhaite, les moyens de diagnostique du troisième module sont aptes à diagnostiquer une défaillance d'au moins un des composants du premier et/ou du deuxième module. Il est ainsi possible de réaliser le diagnostique de chaque module de manière centralisée par le troisième module, et ainsi de réduire le cout du système.

Selon une caractéristique de l'invention, le premier module comprend des moyens de diagnostique aptes à diagnostiquer une défaillance d'au moins un des composants du premier module. Cette caractéristique offre l'avantage d'améliorer la vitesse de réaction du système en cas de défaillance.

Le deuxième module comprend également des moyens de diagnostique aptes à diagnostiquer une défaillance d'au moins un des composants du deuxième module.

Selon une caractéristique de l'invention, le troisième module comporte des moyens de commande, ces moyens de commande étant agencés pour commander ladite désactivation d'émission de lumière des premier et deuxième modules. La gestion du système en cas de défaillance est ainsi réalisée de manière centrale par le troisième module, ce qui permet notamment d'augmenter la vitesse de réaction du système face à une défaillance d'un des modules.

Avantageusement, les moyens de commande sont agencés pour commander la désactivation d'émission de lumière du troisième module.

Selon une caractéristique de l'invention, le système comporte des moyens de communication bidirectionelle, notamment filaires, reliant le premier module au troisième module et le deuxième module au troisième module.

Selon une caractéristique de l'invention les moyens de diagnostique du premier module sont aptes à transmettre une information relative au statut du premier module aux moyens de commande par le biais de ces moyens de communication. Le statut du premier module peut être une indication de l'état dudit module comme par exemple « défaillant », « allumé » ou « éteint ». Ce statut peut être notamment estimé par les moyens de diagnostiques du premier module.

De préférence, les moyens de diagnostique du premier module sont agencés pour transmettre une information relative au statut du premier module aux moyens de commande lors d'un changement de ce statut, notamment lors d'une défaillance du premier module.

Selon une caractéristique de l'invention les moyens de diagnostique du deuxième module sont aptes à transmettre une information relative au statut du deuxième module aux moyens de commande par le biais de ces moyens de communication.

De préférence également, les moyens de diagnostique du deuxième module sont agencés pour transmettre une information relative au statut du deuxième module aux moyens de commande lors d'un changement de ce statut, notamment lors d'une défaillance du deuxième module.

Selon une caractéristique de l'invention, les moyens de commande sont agencés pour transmettre une information au premier module et au deuxième module, commandant la désactivation d'émission de lumière du premier module et du deuxième module, lorsque les moyens de diagnostiques du troisième module diagnostiquent une défaillance du troisième module. De cette manière, le système est dans l'incapacité de réaliser une fonction photométrique en cas de défaillance du troisième module.

Selon une caractéristique de l'invention les moyens de commande 2. sont agencés pour commander la désactivation d'émission de lumière du troisième module uniquement pour la réalisation de la première fonction lorsque le troisième module reçoit une information du premier module relative à une défaillance du premier module.

Le cas échéant, les moyens de commande peuvent être agencés pour pouvoir commander l'activation d'émission de lumière du troisième module pour la réalisation de la deuxième fonction. Cette caractéristique offre l'avantage de pouvoir sélectivement réaliser la deuxième fonction ou empêcher la réalisation de la première fonction en cas de défaillance du premier module.

Selon une caractéristique de l'invention les moyens de commande sont agencés pour commander la désactivation d'émission de lumière du troisième module uniquement pour la réalisation de la deuxième fonction lorsque le troisième module reçoit une information du premier module relative à une défaillance du second module.

Le cas échéant, les moyens de commande peuvent être agencés pour pouvoir commander l'activation d'émission de lumière du troisième module pour la réalisation de la première fonction.

En variante, les moyens de commande peuvent être agencés pour commander la désactivation d'émission de lumière du troisième module pour toutes les réalisations des fonctions lorsque le troisième module reçoit une information du premier module et du deuxième module relative à une défaillance du premier module et du deuxième module.

Selon encore une caractéristique de l'invention, les moyens de commande sont agencés pour transmettre une information au premier module commandant la désactivation d'émission de lumière du premier module lorsque le troisième module reçoit une information du deuxième module relative à une défaillance du deuxième module.

De manière équivalente, les moyens de commande peuvent être agencés pour transmettre une information au deuxième module commandant la désactivation d'émission de lumière du deuxième module lorsque le troisième module reçoit une information du premier module relative à une défaillance du premier module.

Dans un autre mode de réalisation qui n'est pas couvert par les revendications ci-jointes :
- le premier module comporte des moyens de commande aptes à désactiver l'émission de lumière du premier module ;
- le deuxième module comporte des moyens de commande aptes à désactiver l'émission de lumière du deuxième module ; et
- le troisième module comporte des moyens de commande aptes à désactiver l'émission de lumière du troisième module.

Avantageusement, le système comporte des moyens de communication unidirectionnelle, notamment filaires, reliant le premier module au deuxième module, le deuxième module au troisième module et le troisième module au premier module, les moyens de diagnostiques d'un module étant aptes à transmettre une information relative au statut dudit module aux moyens de commande du module suivant par le biais de ces moyens de communication. Cette caractéristique offre l'avantage de réduire le nombre de moyens de communication reliant les modules, ce qui diminue sensiblement le cout du système.

Selon une caractéristique de ce mode de réalisation non couvert par les revendications ci-jointes, les moyens de diagnostique d'un module sont agencés pour transmettre une information relative au statut dudit module aux moyens de commande du module suivant lors d'un changement de ce statut, notamment lors d'une défaillance ou d'une extinction dudit module.

Le cas échéant, les moyens de commande d'un module peuvent être agencés pour désactiver l'émission de lumière de ce module lorsque ces moyens reçoivent une information du module précédent relative à une défaillance ou à une extinction du module précédent.

On entend par module suivant le module situé immédiatement en aval d'un moyen de communication et par module précédent le module situé immédiatement en amont d'un moyen de communication, l'avant et l'aval d'un moyen de communication étant défini par le sens de la communication.

Selon une caractéristique de l'invention, chaque module comporte au moins une source de lumière, notamment une LED. Le cas échéant, la désactivation de l'émission de lumière peut être réalisée par extinction de la source de lumière, notamment par interruption de l'alimentation électrique de la source de lumière.

Selon encore mode de réalisation non couvert par les revendications ci-jointes, chaque module comporte un microcontrôleur, ce microcontrôleur comprenant les moyens de commande dudit module. Avantageusement, le microcontrôleur comprend les moyens de diagnostiques dudit module.

Dans un mode de réalisation préféré de l'invention, la première fonction est un feu de position.

Si on le souhaite, la deuxième fonction est un feu stop.

En variante, la deuxième fonction peut être un éclairage diurne (DRL).

D'autres caractéristiques, détails et avantages de l'invention ressortiront plus clairement à la lecture de la description donnée ci-après à titre indicatif en relation avec des dessins dans lesquels :
- la figure 1 est une vue partielle des circuits électriques d'un système selon un exemple de réalisation non couvert par les revendications ci-jointes,
- la figure 2 est une vue schématique d'un procédé de commande du système de la figure 1,
- la figure 3 est une vue partielle des circuits électriques d'un système selon un autre exemple de réalisation de l'invention,
- la figure 4 est une vue schématique d'un procédé de commande du système de la figure 3,
- les figures 5A à 5C sont des vues de face du système de la figure 1, et
- les figures 6A à 6C sont des vues de face du système de la figure 3.

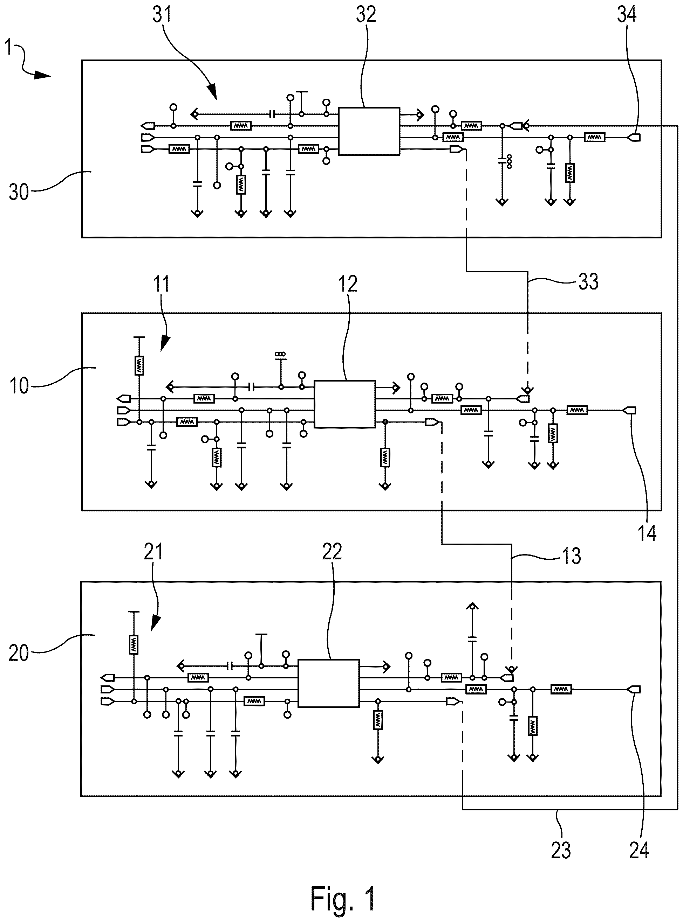

La figure 1 illustre un système d'éclairage et/ou de signalisation 1.

Le système 1 comporte un premier module lumineux 10, un deuxième module lumineux 20 et un troisième module lumineux 30.

Le premier module lumineux 10 est apte à réaliser une partie d'une première fonction d'éclairage et/ou de signalisation réglementaire, par exemple un feu de position.

Le deuxième module lumineux 20 est apte à réaliser une partie d'une deuxième fonction d'éclairage et/ou de signalisation réglementaire distincte de la première fonction, par exemple un feu stop.

Le troisième module 30 est apte à réaliser sélectivement au moins une autre partie de la première fonction et au moins une autre partie de la deuxième fonction.

Typiquement, les modules 10, 20 et 30 comportent chacun au moins une source de lumière 14, 24 et 34, par exemple une diode électroluminescente, et des moyens de projections de la lumière émise par cette source de lumière, non représentés.

Les modules 10, 20 et 30 comportent chacun un circuit électrique 11, 21 et 31. Chaque circuit électrique 11, 21 et 31 est connecté électriquement à la source de lumière du module associé, par exemple pour alimenter électriquement cette source de lumière.

Les circuits électriques 11, 21 et 31 comportent chacun un microcontrôleur 12, 22 et 32. Chaque microcontrôleur 12, 22 et 32 est :
- aptes à désactiver l'émission de lumière de la source de lumière du module 10, 20 et 30 associé, par exemple en interrompant l'alimentation de cette source, et
- aptes à diagnostiquer une défaillance d'au moins un des composants du module 10, 20 et 30 associé.

Le système 1 comporte des moyens de communication unidirectionnelle filaires 13, 23 et 33, les moyens de communication 13 reliant le premier module 10 au deuxième module 20, les moyens de communication 23 reliant le deuxième module au troisième module et les moyens de communication 33 reliant le troisième module au premier module.

Les microcontrôleurs 12, 22 et 32 sont agencés pour transmettre une information relative au statut du module associé 10, 20 et 30 au microcontrôleur 22, 32 et 12 du module suivant lors d'un changement de ce statut, notamment lors d'une défaillance ou d'une extinction dudit module.

Les microcontrôleurs 12, 22 et 32 sont agencés pour désactiver l'émission de lumière du module 10, 20 et 30 associé lorsque ces microcontrôleurs reçoivent une information du module précédent relative à une défaillance ou à une extinction du module précédent.

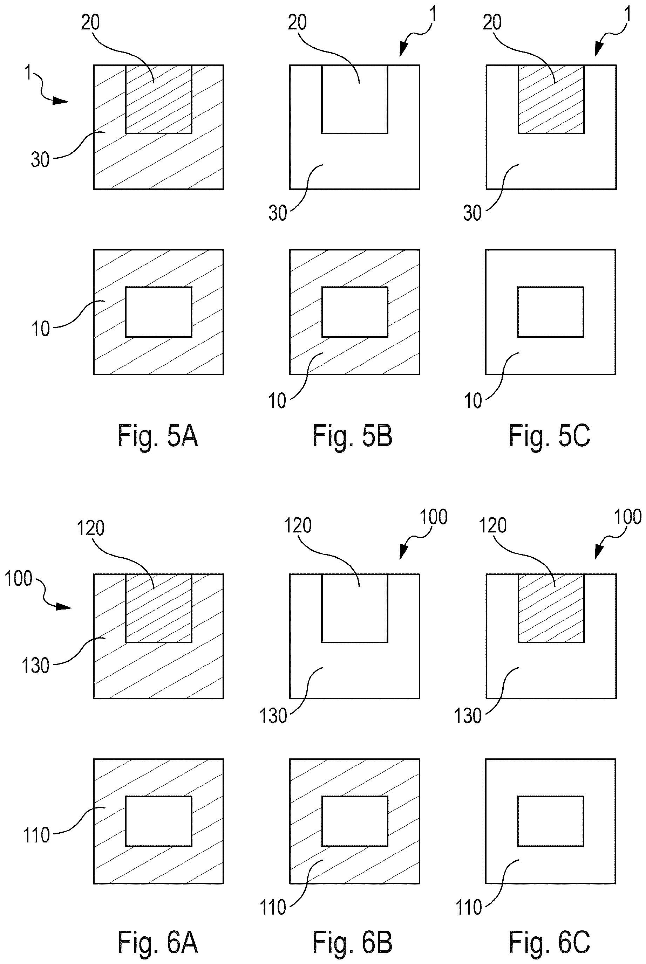

Le fonctionnement du système 1 dans un mode de fonctionnement normal, c'est-à-dire sans défaillance, est illustré par les figures 5A à 5C.

La figure 5A illustre le système 1 dans un mode de fonctionnement « éteint ». Dans ce mode, le système 1 n'émet aucune lumière.

La figure 5B illustre le système 1 dans un deuxième mode de fonctionnement dit « stop ». Dans ce mode, le système réalise une fonction « stop » en activant conjointement l'émission de lumière des modules 20 et 30 et en désactivant l'émission de lumière du module 10.

La figure 5C illustre le système 1 dans un troisième mode de fonctionnement dit « position ». Dans ce mode, le système réalise une fonction « position » en activant conjointement l'émission de lumière des modules 10 et 30 et en désactivant l'émission de lumière du module 20.

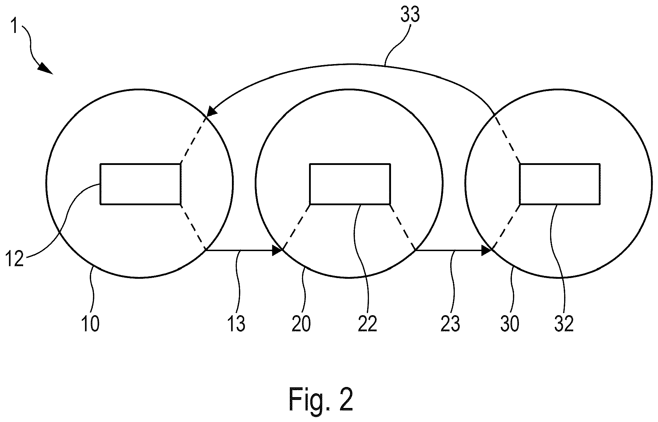

On a illustré en figure 2 le procédé de fonctionnement du système de la figure 1 en cas de défaillance d'un des modules 10, 20 ou 30.

En cas de défaillance d'un composant, par exemple la source de lumière, d'un des modules 10, 20 ou 30, le microcontrôleur 12, 22 ou 32 de ce module diagnostique la défaillance.

Le microcontrôleur transmet le statut « défaillant » au microcontrôleur 22, 32 ou 12 du module suivant 20, 30 ou 10 par le biais des moyens de communication 13, 23 ou 33.

Lorsque le microcontrôleur 22, 32 ou 12 du module suivant reçoit le statut « défaillant » du module précédent 10, 20 ou 30, ce microcontrôleur interrompt l'alimentation de la source de lumière du module 20, 30 ou 10 associé.

De plus, il transmet également le statut « éteint » au microcontrôleur 32, 12 ou 22 du module suivant 30, 10 ou 20 par le biais des moyens de communication 23, 33 ou 13.

Enfin, lorsque le microcontrôleur 32, 12 ou 22 du module suivant 30, 10 ou 20 reçoit le statut « éteint », ce microcontrôleur interrompt également l'alimentation de la source de lumière de ce module suivant.

De cette manière, lorsqu'il est constaté qu'une défaillance est intervenue sur l'un des composants d'un des modules, le système est rendu incapable de réaliser une quelconque fonction photométrique.

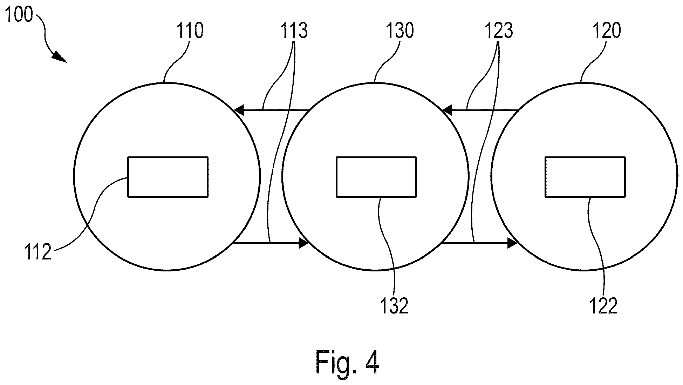

On a illustré en figure 4 un système d'éclairage et/ou de signalisation 100 selon un mode de réalisation de l'invention.

Le système 1 comporte un premier module lumineux 110, un deuxième module lumineux 120 et un troisième module lumineux 130.

Les modules 110, 120 et 130 comportent chacun au moins une source de lumière 114, 124 et 134, par exemple une diode électroluminescente, et des moyens de projections de la lumière émise par cette source de lumière, non représentés.

Les modules comportent chacun un circuit électrique 111, 121 et 131, ce circuit électrique comportant un microcontrôleur 112, 122 et 132.

Le microcontrôleur 132 est :
- apte à diagnostiquer une défaillance d'au moins un des composants des modules 110, 120 et 130 ; et
- apte à commander la désactivation d'émission de lumière des modules 110, 120 et 130.

Le système 100 comporte des moyens de communication bidirectionelle filaires 113 et 123, les moyens de communication 113 reliant le premier module 110 au troisième module 130 et les moyens de communication 123 reliant le deuxième module 120 au troisième module 130.

Le microcontrôleur 132 est agencé pour transmettre une information au premier module 110 et au deuxième module 120 par le biais des moyens de communication 113 et 123, lorsque que ce microcontrôleur 132 diagnostique une défaillance du troisième module 130, notamment de la source de lumière de ce troisième module. Cette information commande la désactivation d'émission de lumière du module auquel elle est transmise. De cette manière, le système est dans l'incapacité de réaliser une fonction photométrique en cas de défaillance du troisième module.

Le microcontrôleur 132 est agencé pour commander la désactivation d'émission de lumière du troisième module 130 uniquement pour la réalisation de la première fonction lorsque le microcontrôleur 132 diagnostique une défaillance du premier module 110.

De manière équivalente, le microcontrôleur 132 est agencé pour commander la désactivation d'émission de lumière du troisième module 130 uniquement pour la réalisation de la deuxième fonction lorsque le microcontrôleur 132 diagnostique une défaillance du deuxième module 120.

Toutefois, en cas de défaillance du premier module 110 ou du second module 120, le microcontrôleur 132 est agencé pour pouvoir commander l'activation d'émission de lumière du troisième module pour la réalisation respectivement de la deuxième fonction ou de la première fonction.

En variante, le microcontrôleur 132 peut être agencé pour commander la désactivation d'émission de lumière du troisième module 130 pour toutes les réalisations des fonctions lorsque le microcontrôleur 132 diagnostique une défaillance du premier module 110 et/ou du deuxième module 120.

Le microcontrôleur 132 est alors agencé pour transmettre une information au microcontrôleur 122 du second module 120 ou au microcontrôleur 112 du premier module 110, commandant la désactivation d'émission de lumière respectivement de ce second module ou de ce premier module, lorsque le microcontrôleur 132 diagnostique une défaillance respectivement du premier module 110 ou du deuxième module 120.

Le fonctionnement du système 100 dans un mode de fonctionnement normal, c'est-à-dire sans défaillance, est illustré par les figures 6A à 6C. Ce fonctionnement est en tout point semblable à celui du fonctionnement du système 1 dans un mode de fonctionnement normal tel qu'illustré aux figures 5A à 5C.

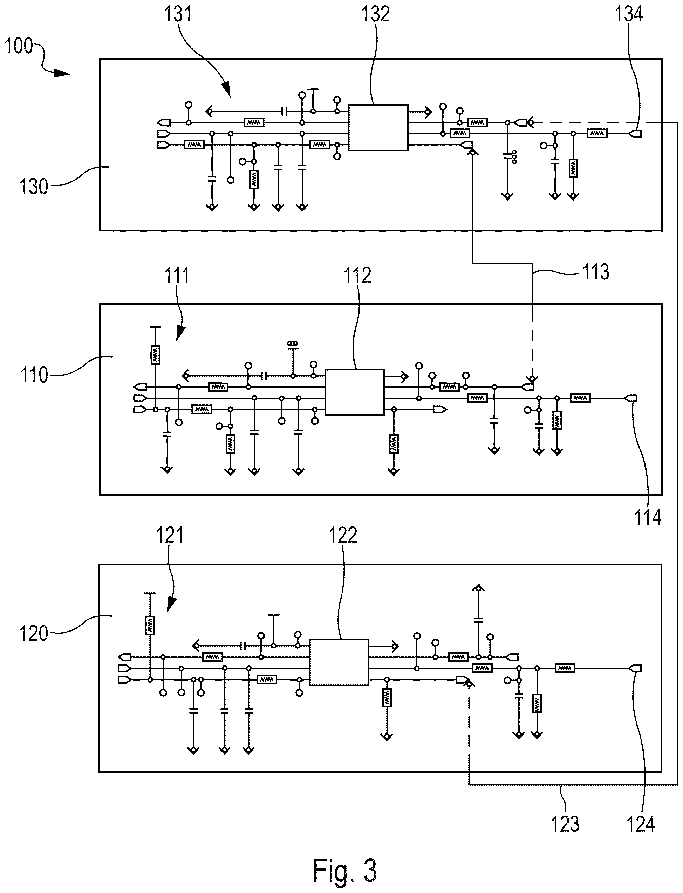

On a illustré en figure 4 le procédé de fonctionnement du système de la figure 3 en cas de défaillance d'un des modules 110, 120 ou 130.

En cas de défaillance d'un composant, par exemple la source de lumière, du module 130, le microcontrôleur 132 de ce module diagnostique la défaillance.

Le microcontrôleur 132 transmet une information aux microcontrôleurs 112 et 122 des modules 110 et 120 par le biais des moyens de communication 113 et 123. Cette information commande la désactivation d'émission de lumière du module auquel elle est transmise.

En cas de défaillance d'un composant, par exemple la source de lumière, du module 110 ou du module 120, le microcontrôleur 132 du module 130 diagnostique la défaillance.

Le microcontrôleur 132 commande alors la désactivation d'émission de lumière du troisième module 130 uniquement pour la réalisation de la première fonction, respectivement de la deuxième fonction, lorsque le microcontrôleur 132 diagnostique la défaillance du premier module 110, respectivement du deuxième module 120.

Lorsque l'utilisateur souhaite activer la réalisation d'une fonction photométrique nécessitant des modules qui ne sont pas défaillants, le microcontrôleur 132 commande l'activation d'émission de lumière du troisième module 130 pour la réalisation de cette fonction en combinaison avec l'activation d'émission de lumière du module non défaillant par le microcontrôleur qui lui est associé.

## Revendications

1. Système de signalisation pour véhicule automobile, comprenant :
- un premier module lumineux (110) apte à réaliser une partie d'une première fonction de signalisation réglementaire ;
- un deuxième module lumineux (120) apte à réaliser une partie d'une deuxième fonction de signalisation réglementaire distincte de la première fonction, et
- un troisième module lumineux (130) apte à réaliser sélectivement au moins une autre partie de la première fonction de signalisation réglementaire et au moins une autre partie de la deuxième fonction de signalisastion réglementaire
le système de signalisation étant **caractérisé**:
- **en ce qu'**il comprend des moyens de communication bidirectionnelle (113, 123, 133), notamment filaires, reliant le premier module lumineux (110) au troisième module lumineux (130) et le deuxième module lumineux (120) au troisième module lumineux (130),
- **en ce que** chacun des premier, deuxième et troisième modules lumineux (110, 120, 130) comprend des moyens de diagnostique (112, 122, 132) aptes à diagnostiquer une défaillance d'au moins un des composants respectivement du premier, deuxième et troisième module lumineux, notamment une défaillance d'une source de lumière respectivement du premier, deuxième et troisième module lumineux,
- **en ce que** troisième module lumineux (130) comporte des moyens de commande (132), agencés pour commander la désactivation d'émission de lumière des premier, deuxième et troisième modules lumineux (110, 120, 130),
- **en ce que** les moyens de diagnostique (112) du premier module lumineux (110) sont aptes à transmettre une information relative au statut du premier module lumineux (110) aux moyens de commande (132) par le biais de ces moyens de communication bidirectionnelle,
- **en ce que** les moyens de diagnostique (122) du deuxième module lumineux (120) sont aptes à transmettre une information relative au statut du deuxième module lumineux (120) aux moyens de commande (132) par le biais de ces moyens de communication bidirectionnelle,
- **en ce que** les moyens de commande (132) sont agencés pour commander la désactivation d'émission de lumière du troisième module lumineux (130) uniquement pour la réalisation de la première fonction de signalisation réglementaire lorsque le troisième module lumineux (130) reçoit une information du premier module lumineux (110) relative à une défaillance du premier module lumineux (110), et pour commander la désactivation d'émission de lumière du troisième module lumineux (130) uniquement pour la réalisation de la deuxième fonction de signalisation réglementaire lorsque le troisième module lumineux (130) reçoit une information du deuxième module lumineux (120) relative à une défaillance du deuxième module lumineux (120), et
- **en ce que** le système de signalisation est configuré pour que l'émission de lumière des premier et deuxième modules lumineux (110, 120) soit désactivée en cas de défaillance du troisième module lumineux (130).

2. Système de signalisation selon la revendication précédente, dans lequel chacun des premier, deuxième et troisième modules lumineux (110, 120, 130) comporte au moins une source de lumière (114, 124, 134), notamment une LED, la désactivation de l'émission de lumière étant réalisée par extinction de la source de lumière, notamment par interruption de l'alimentation électrique de la source de lumière.

3. Système de signalisation selon l'une des revendications précédentes, dans lequel les moyens de commande (132) sont agencés pour commander la désactivation d'émission de lumière du troisième module lumineux (130) pour toutes les réalisations des première et deuxième fonctions de signalisation réglementaire lorsque le troisième module lumineux (130) mi reçoit une information du premier module lumineux (110) et du deuxième module lumineux (120) relative à une défaillance du premier module lumineux (110) et du deuxième module lumineux (120).

4. Système de signalisation selon l'une des revendications précédentes, dans lequel les moyens de commande (132) sont agencés :
- pour transmettre une information au premier module lumineux (110) commandant la désactivation d'émission de lumière du premier module lumineux (110) lorsque le troisième module lumineux (130) reçoit une information du deuxième module lumineux (120) relative à une défaillance du deuxième module lumineux (120), et/ou
- pour transmettre une information au deuxième module lumineux (120) commandant la désactivation d'émission de lumière du deuxième module lumineux (120) lorsque le troisième module lumineux (130) reçoit une information du premier module lumineux (110) relative à une défaillance du premier module lumineux (110).

5. Système de signalisation selon l'une des revendications précédentes, 2. dans lequel
- la première fonction de signalisation réglementaire est un feu de position, et/ou
- la deuxième fonction de signalisation réglementaire est un feu stop ou un éclairage diurne, DRL.

## Patentansprüche

1. Signalisierungssystem für ein Kraftfahrzeug, umfassend:
- ein erstes Leuchtmodul (110), das geeignet ist, einen Teil einer ersten vorschriftsmäßigen Signalisierungsfunktion auszuführen;
- ein zweites Leuchtmodul (120), das geeignet ist, einen Teil einer zweiten vorschriftsmäßigen Signalisierungsfunktion auszuführen, die von der ersten Funktion verschieden ist, und
- ein drittes Leuchtmodul (130), das geeignet ist, selektiv mindestens einen anderen Teil der ersten vorschriftsmäßigen Signalisierungsfunktion und mindestens einen anderen Teil der zweiten Signalisierungsfunktion auszuführen,
wobei das Signalisierungssystem **dadurch gekennzeichnet ist**:
- **dass** es Einrichtungen zur bidirektionalen Kommunikation (113, 123, 133) umfasst, insbesondere drahtgebundene, die das erste Leuchtmodul (110) mit dem dritten Leuchtmodul (130) und das zweite Leuchtmodul (120) mit dem dritten Leuchtmodul (130) verbinden,
- **dass** jedes der ersten, zweiten und dritten Leuchtmodule (110, 120, 130) Diagnoseeinrichtungen (112, 122, 132) umfasst, die geeignet sind, einen Ausfall mindestens einer der Komponenten des ersten, zweiten beziehungsweise dritten Leuchtmoduls zu diagnostizieren, insbesondere einen Ausfall einer Lichtquelle des ersten, zweiten beziehungsweise dritten Leuchtmoduls,
- **dass** das dritte Leuchtmodul (130) Steuerungseinrichtungen (132) beinhaltet, die dazu ausgebildet sind, die Lichtaussendungsdeaktivierung der ersten, zweiten und dritten Leuchtmodule (110, 120, 130) zu steuern,
- **dass** die Diagnoseeinrichtungen (112) des ersten Leuchtmoduls (110) geeignet sind, über diese Einrichtungen zur bidirektionalen Kommunikation eine Information über den Status des ersten Leuchtmoduls (110) an die Steuerungseinrichtungen (132) zu übertragen,
- **dass** die Diagnoseeinrichtungen (122) des zweiten Leuchtmoduls (120) geeignet sind, über diese Einrichtungen zur bidirektionalen Kommunikation eine Information über den Status des zweiten Leuchtmoduls (120) an die Steuerungseinrichtungen (132) zu übertragen,
- **dass** die Diagnoseeinrichtungen (132) dazu ausgebildet sind, die Lichtaussendungsdeaktivierung des dritten Leuchtmoduls (130) nur für die Ausführung der ersten vorschriftsmäßigen Signalisierungsfunktion zu steuern, wenn das dritte Leuchtmodul (130) eine Information des ersten Leuchtmoduls (110) über einen Ausfall des ersten Leuchtmoduls (110) empfängt, und die Lichtaussendungsdeaktivierung des dritten Leuchtmoduls (130) nur für die Ausführung der zweiten vorschriftsmäßigen Signalisierungsfunktion zu steuern, wenn das dritte Leuchtmodul (130) eine Information des zweiten Leuchtmoduls (120) über einen Ausfall des zweiten Leuchtmoduls (120) empfängt, und
- **dass** das Signalisierungssystem dazu ausgestaltet ist, dass die Lichtaussendung der ersten und zweiten Leuchtmodule (110, 120) im Fall eines Ausfalls des dritten Leuchtmoduls (130) deaktiviert wird.

2. Signalisierungssystem nach dem vorhergehenden Anspruch, bei dem jedes der ersten, zweiten und dritten Leuchtmodule (110, 120, 130) mindestens eine Lichtquelle (114, 124, 134) beinhaltet, insbesondere eine LED, wobei die Lichtaussendungsdeaktivierung durch Abschalten der Lichtquelle ausgeführt wird, insbesondere durch Unterbrechen der Stromversorgung der Lichtquelle.

3. Signalisierungssystem nach einem der vorhergehenden Ansprüche, bei dem die Steuerungseinrichtungen (132) dazu ausgebildet sind, die Lichtaussendungsdeaktivierung des dritten Leuchtmoduls (130) für alle Ausführungen der ersten und zweiten vorschriftsmäßigen Signalisierungsfunktionen zu steuern, wenn das dritte Leuchtmodul (130) eine Information des ersten Leuchtmoduls (110) und des zweiten Leuchtmoduls (120) über einen Ausfall des ersten Leuchtmoduls (110) und des zweiten Leuchtmoduls (120) empfängt.

4. Signalisierungssystem nach einem der vorhergehenden Ansprüche, bei dem die Steuerungseinrichtungen (132) dazu ausgebildet sind:
- eine Information an das erste Leuchtmodul (110) zu übertragen, die die Lichtaussendungsdeaktivierung des ersten Leuchtmoduls (110) steuert, wenn das dritte Leuchtmodul (130) eine Information des zweiten Leuchtmoduls (120) über einen Ausfall des zweiten Leuchtmoduls (120) empfängt, und/oder
- eine Information an das zweite Leuchtmodul (120) zu übertragen, die die Lichtaussendungsdeaktivierung des zweiten Leuchtmoduls (120) steuert, wenn das dritte Leuchtmodul (130) eine Information des ersten Leuchtmoduls (110) über einen Ausfall des ersten Leuchtmoduls (110) empfängt.

5. Signalisierungssystem nach einem der vorhergehenden Ansprüche, bei dem:
- die erste vorschriftsmäßige Signalisierungsfunktion ein Standlicht ist und/oder
- die zweite vorschriftsmäßige Signalisierungsfunktion ein Bremslicht oder ein Tagfahrlicht, DRL, ist.

## Claims

1. Signalling system for a motor vehicle, comprising:
- a first light module (110) which is able to perform part of a first regulatory signalling function;
- a second light module (120) which is able to perform part of a second regulatory signalling function which is distinct from the first function, and
- a third light module (130) which is able to selectively perform at least one other part of the first regulatory signalling function and at least one other part of the second regulatory signalling function;
the signalling system being **characterized**:
- **in that** it comprises bidirectional communication means (113, 123, 133), notably wired ones, connecting the first light module (110) to the third light module (130) and the second light module (120) to the third light module (130) ,
- **in that** each of the first, second and third light modules (110, 120, 130) comprises diagnostic means (112, 122, 132) which are able to diagnose a failure of at least one of the components of the first, second and third light modules, respectively, notably a failure of a light source of the first, second and third light modules, respectively,
- **in that** the third light module (130) comprises control means (132), arranged to order the deactivation of the emission of light from the first, second and third light modules (110, 120, 130),
- **in that** the diagnostic means (112) of the first light module (110) are able to transmit an item of information relating to the status of the first light module (110) to the control means (132) via these bidirectional communication means,
- **in that** the diagnostic means (122) of the second light module (120) are able to transmit an item of information relating to the status of the second light module (120) to the control means (132) via these bidirectional communication means,
- **in that** the control means (132) are arranged to order the deactivation of the emission of light from the third light module (130) only for performing the first regulatory signalling function when the third light module (130) receives an item of information from the first light module (110) relating to a failure of the first light module (110), and to order the deactivation of the emission of light from the third light module (130) only for performing the second regulatory signalling function when the third light module (130) receives an item of information from the second light module (120) relating to a failure of the second light module (120), and
- **in that** the signalling system is configured so that the emission of light from the first and second light modules (110, 120) is deactivated in the event of a failure of the third light module (130).

2. Signalling system according to the preceding claim, in which each of the first, second and third light modules (110, 120, 130) comprises at least one light source (114, 124, 134), notably an LED, the emission of light being deactivated by switching off the light source, notably by interrupting the electric power supply to the light source.

3. Signalling system according to one of the preceding claims, in which the control means (132) are arranged to order the deactivation of the emission of light from the third light module (130) for all the performances of the first and second regulatory signalling functions when the third light module (130) receives an item of information from the first light module (110) and from the second light module (120) relating to a failure of the first light module (110) and of the second light module (120).

4. Signalling system according to one of the preceding claims, in which the control means (132) are arranged:
- to transmit an item of information to the first light module (110) ordering the deactivation of the emission of light from the first light module (110) when the third light module (130) receives an item of information from the second light module (120) relating to a failure of the second light module (120), and/or
- to transmit an item of information to the second light module (120) ordering the deactivation of the emission of light from the second light module (120) when the third light module (130) receives an item of information from the first light module (110) relating to a failure of the first light module (110).

5. Signalling system according to one of the preceding claims, in which:
- the first regulatory signalling function is a position light, and/or
- the second regulatory signalling function is a stop light or daytime lighting, DRL.
